# EUROPEAN PATENT SPECIFICATION

(11) **EP 2 976 211 B1**
(45) Date of publication and mention of the grant of the patent: **09.11.2016**
(21) Application number: 14716907.2
(22) Date of filing: 05.03.2014
(51) Int. Cl.: B29C 65/74, B29C 65/18, B26D 7/26

(54) **APPARATUS FOR CUTTING AND SEALING PLASTICS MATERIAL**
VORRICHTUNG ZUM SCHNEIDEN UND ABDICHTEN EINES KUNSTSTOFFMATERIALS
APPAREIL POUR COUPER ET SCELLER UNE MATIÈRE PLASTIQUE

(30) Priority: 19.03.2013 GB 201305033
(43) Date of publication of application: 27.01.2016
(73) Proprietor: Ceetak Ltd., Bedford MK44 3WH (GB)
(72) Inventor: LINES, David Frederick, Bedford Bedfordshire MK44 3WH (GB)
(74) Representative: Evens, Paul Jonathan
(86) International application number: PCT/GB2014/050641
(87) International publication number: WO 2014/147369

(56) References cited:
- EP-A2- 1 101 856
- GB-A- 2 472 760

## Description

The present invention relates to apparatus for cutting and sealing plastics materials, particularly plastics materials in sheet, roll or bag form, and relates more particularly to an anvil for use in such apparatus.

EP-A-1101856 discloses a textile-cutting device comprising an anvil assembly for selective cooperation with a horn operatively connected to an ultrasonic wave generator to cut and seal a textile workpiece.

Apparatus for cutting and sealing plastics materials comprises a pair of opposed jaws, one of which includes an elongate die with a heating element and the other of which includes an elongate anvil. In use, plastics material is placed between the pair of jaws, which are then brought together until the heated die urges the plastics material against the anvil, creating a seal which may be a hermetic seal. The anvil may include a cutting edge which effects a cut in the plastics material as the seal is formed.

In UK Patent Application GB 2472760, the present applicant proposed a novel anvil arrangement with a rapid change rotational cutting member having a plurality of cutting edges (e.g. four cutting edges). The cutting member has a diamond shaped cross-section and is mounted in a resilient support made from heat resistant rubber, with one of the plurality of cutting edges protruding proud of the working face of the anvil to cut plastics material during heat sealing. Once the protruding cutting edge becomes worn out or otherwise damaged through use, the cutting member is removed from the resilient support and remounted with another of the plurality of cutting edges protruding proud of the working face of the anvil. This process may be repeated until all four cutting edges have been used and worn out.

The present applicant has found that whilst the principle of the novel anvil arrangement disclosed in GB2472760 is sound, the practical difficulties of ensuring a good fit between the rapid change rotational cutting member and the resilient support give rise to problems with reproducible cutting and sealing of plastics material. The present invention has been devised to ameliorate and even obviate such problems.

In accordance with the present invention, there is provided apparatus for cutting and sealing plastics materials, including an anvil comprising: a resilient support defining at least part of a working face of the anvil; and a cutting member comprising an elongate body with a longitudinal axis and a plurality of cutting edges parallel thereto, the cutting edges being spaced around the longitudinal axis of the elongate body, the cutting member being mounted in the resilient support with one cutting edge exposed at the working face of the anvil, characterised in that the cutting member has a profile configured to maintain at the working face of the anvil a substantially constant spacing between portions of the resilient support on opposite sides of the cutting member during compression of the resilient support.

The present applicant has appreciated the importance of maintaining at the working face of the anvil the substantially constant spacing between portions of the resilient support on opposite sides of the cutting member during cutting and sealing of plastics materials (i.e. when a load is applied to the working face of the anvil to compress the resilient support). With the arrangement proposed in GB2472760, the wedge-like profile of the cutting member adjacent the cutting edge exposed at the working face of the anvil has a tendency to urge portions of the resilient member in opposite directions away from the cutting edge during compression of the resilient member. Such displacement separating portions of the resilient support applies tension to plastics material (in a direction transverse to the longitudinal axis of the cutting element) during cutting and sealing which has a negative impact on seal/cut quality.

The elongate body may have at least one part associated with each cutting edge which includes a surface extending substantially perpendicular to a notional plane defined by its respective cutting edge and the longitudinal axis of the elongate body. Such a surface (which in use may be substantially parallel to a part of the working face of the anvil defined by the resilient support and which is adjacent the cutting edge exposed at the working face of the anvil) forms part of the profile which helps to prevent lateral separation of portions of the resilient support during compression. The elongate body may have two such parts, one on each lateral side of their respective cutting edge.

The cutting edges may be equally spaced in a circumferential direction around the longitudinal axis of the elongate body. The cutting member may have four cutting edges. The cutting member may have a cruciform cross-section, centred on the longitudinal axis, with the four cutting edges mounted on radially outermost tips of the cruciform cross-section.

The apparatus may further include an elongate die with a heating element, the elongate die being positioned opposite the working face of the anvil, the elongate die and anvil being moveable from a first position with a gap therebetween for receiving plastics material to a second position with the elongate die abutting the anvil. In moving from the first position to the second position (e.g. when sealing and cutting plastics material disposed in the gap), the elongate die will compress the resilient material around the cutting element.

### BRIEF DESCRIPTION OF THE DRAWINGS

An embodiment of the present invention will now be described, by way of example, and with reference to the accompanying figures, in which:
Figure 1 illustrates a cutaway perspective view showing cross-sectional details of apparatus embodying the present invention;

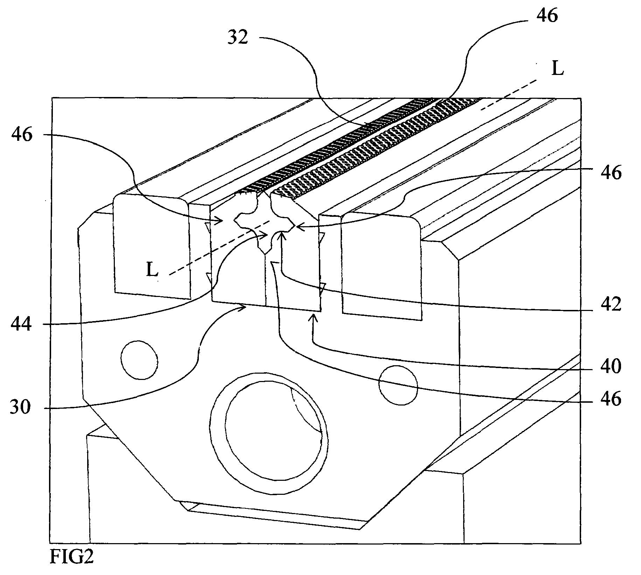

Figure 2 illustrates in detail a lower jaw of the apparatus of Figure 1, and

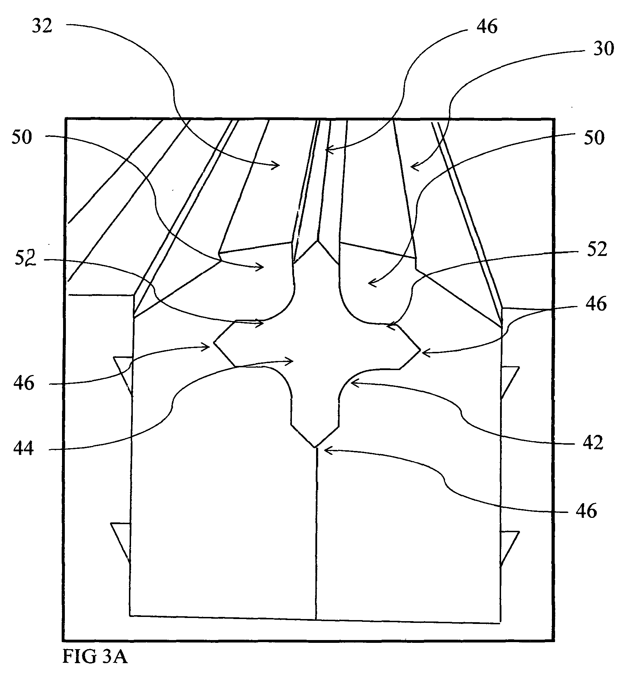

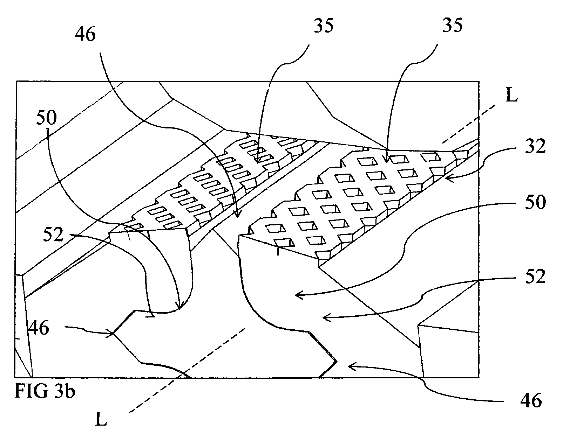

Figures 3a and 3b illustrate in detail an anvil of the lower jaw of the apparatus of Figures 1 and 2.

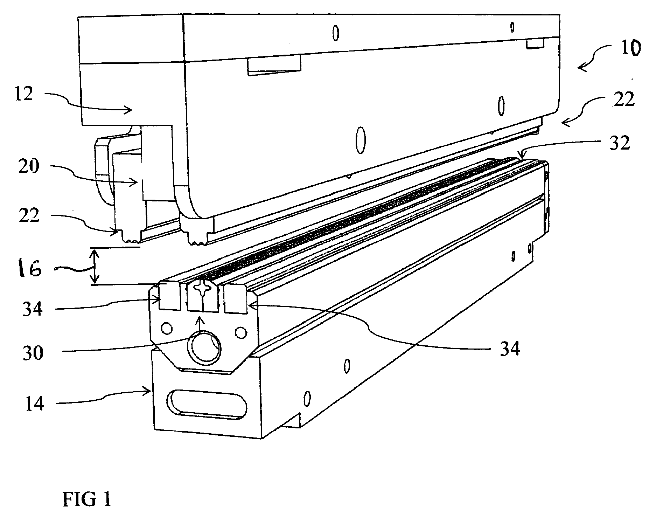

Figure 1 illustrates components of apparatus 10 embodying the present invention. The apparatus 10 includes upper and lower jaws 12,14 which in use reciprocate between a first position (as illustrated) with a gap 16 therebetween and a second position where the upper and lower jaws 12,14 press against any plastics material positioned therebetween. The upper jaw 12 includes an elongate die 20 with a heating element (not shown). The elongate die 20 is sandwiched between a first pair of grippers 22 which are resiliently mounted in the upper jaw 12. The lower jaw 14 includes an anvil 30 (described in greater detail hereinafter) with a working face 32 disposed between a second pair of grippers 34. In use, plastics material in sheet, roll or bag form is placed in the gap 16, between jaws 12, 14. As the jaws 12, 14 move from the first position to the second position, the first and second pairs of grippers 22, 34 are urged together, gripping the plastics material disposed in the gap 16. At the same time, the elongate die 20 advances relative to the first pair of grippers 22 until it urges the plastics material against the working face 32 of the anvil 30, to enable heat sealing and cutting of the plastics material as is known in the art.

The anvil 30 comprises a resilient support 40 and a cutting member 42. The resilient support 40 defines at least part of the working face 32 of the anvil, and includes a surface relief pattern 35 (known as a "cross hatch" or "labyrinth") for pressure intensification and to create a visible indication of seal integrity. The cutting member 42 comprises an elongate body 44 with a longitudinal axis LL and a plurality (i.e. four) of cutting edges 46 which are parallel to and spaced around the longitudinal axis LL. The cutting member 42 is mounted in the resilient support 40 with one cutting edge 46 exposed at the working face 32 of the anvil 30.

The cutting member 42 has a cruciform cross-section and thus each cutting edge 46 has two parts or shoulder regions 50 associated therewith which project laterally on either side into the resilient support 40. Each part 50 defines a surface 52 extending substantially perpendicularly to a notional plane extending between its associated cutting edge 46 and the longitudinal axis LL of the elongate body. The surface 52 is substantially parallel to the working face 32 of the resilient support 40 resting thereon. In use, the surfaces 52 support the resilient support 40 adjacent the cutting edge 46 exposed at the working face 32 of the anvil 30 as the resilient support is compressed by the elongate die 20. The orientation of the surfaces 52 gives the cutting member 42 a profile which helps to maintain at the working face 32 of the anvil 30 a substantially constant spacing between portions of the resilient support 40 on opposite sides of the cutting member 42 during compression of the resilient support 40.

When the cutting edge 46 exposed at the working face 32 of the anvil 30 becomes worn after repeated use, the cutting member 42 may be removed from the resilient support 40. However, rather than be replaced, the cutting member 42 may be rotated axially and re-mounted in the resilient support 40 such that one of the other cutting edges 46 is exposed at the working face 32 of the anvil 30.

## Claims

1. Apparatus (10) for cutting and sealing plastics materials, including an anvil (30) comprising:
a resilient support (40) defining at least part of a working face (32) of the anvil (30); and
a cutting member (42) comprising an elongate body (44) with a longitudinal axis and a plurality of cutting edges (46) parallel thereto, the cutting edges (46) being spaced around the longitudinal axis of the elongate body (44), the cutting member (42) being mounted in the resilient support (40) with one cutting edge (46) exposed at the working face (32) of the anvil (30),
**characterised in that** the cutting member (42) has a profile configured to maintain at the working face (32) of the anvil (30) a substantially constant spacing between portions of the resilient support (40) on opposite sides of the cutting member (42) during compression of the resilient support (40).

2. Apparatus (10) according to claim 1, in which the elongate body (44) has at least one part (50) associated with each cutting edge (46) which includes a surface (52) extending substantially perpendicular to a notional plane defined by its respective cutting edge and the longitudinal axis of the elongate body (44).

3. Apparatus (10) according to claim 2, in which each of the cutting edges (46) has two parts (50) associated with each cutting edge (46), one on either side thereof, each part (50) including a surface (52) extending substantially perpendicular to a notional plane defined by its respective cutting edge (46) and the longitudinal axis of the elongate body (44).

4. Apparatus (10) according to any one of the preceding claims, in which the cutting edges (46) are equally spaced in a circumferential direction around the longitudinal axis of the elongate body (44).

5. Apparatus (10) according to any one of the preceding claims, in which the cutting member (42) has four cutting edges (46).

6. Apparatus (10) according to claim 5, in which the cutting member (42) has a cruciform cross-section.

7. Apparatus (10) according to any one of the preceding claims, further including an elongate die (20) with a heating element, the elongate die (20) being positioned opposite the working face (32) of the anvil (30), the elongate die (20) and anvil (30) being moveable from a first position with a gap therebetween for receiving plastics material to a second position with the elongate die (20) abutting the anvil (30).

## Patentansprüche

1. Vorrichtung (10) zum Schneiden und Versiegeln von Kunststoffmaterial, einschließlich eines Ambosses (30), umfassend:
eine elastische Stütze (40), die zumindest einen Teil einer Arbeitsfläche (32) des Ambosses (30) definiert; und
ein Schneideelement (42), das einen länglichen Körper (44) mit einer Längsachse und einer Vielzahl von dazu parallelen Schneidekanten (46) umfasst, wobei die Schneidekanten (46) um die Längsachse des länglichen Körpers (44) beabstandet sind, wobei das Schneideelement (42) mit einer an der Arbeitsfläche (32) des Ambosses (30) freiliegenden Schneidekante (46) in der elastischen Stütze (40) angebracht ist,
**dadurch gekennzeichnet, dass** das Schneideelement (42) ein Profil aufweist, das konfiguriert ist, um während des Zusammendrückens der elastischen Stütze (40) einen im Wesentlichen konstanten Abstand zwischen Abschnitten der elastischen Stütze (40) an gegenüberliegenden Seiten des Schneideelements (42) an der Arbeitsfläche (32) des Ambosses (30) beizubehalten.

2. Vorrichtung (10) nach Anspruch 1, bei der der längliche Körper (44) zumindest einen Teil (50) aufweist, der jeder Schneidekante (46) zugeordnet ist, was eine Oberfläche (52) einschließt, die sich im Wesentlichen senkrecht zu einer gedachten Ebene erstreckt, die durch ihre entsprechende Schneidekante und die Längsachse des länglichen Körpers (44) definiert ist.

3. Vorrichtung (10) nach Anspruch 2, bei der jede der Schneidekanten (46) zwei Teile (50) aufweist, die jeder Schneidekante (46) zugeordnet sind, eine auf jeder Seite davon, wobei jeder Teil (50) eine Oberfläche (52) einschließt, die sich im Wesentlichen senkrecht zu einer gedachten Ebene erstreckt, die durch ihre entsprechende Schneidekante (46) und die Längsachse des länglichen Körpers (44) definiert ist.

4. Vorrichtung (10) nach einem der vorhergehenden Ansprüche, bei der die Schneidekanten (46) in einer Umfangsrichtung um die Längsachse des länglichen Körpers (44) gleich beabstandet sind.

5. Vorrichtung (10) nach einem der vorhergehenden Ansprüche, bei der das Schneideelement (42) vier Schneidekanten (46) aufweist.

6. Vorrichtung (10) nach Anspruch 5, bei der das Schneideelement (42) einen kreuzförmigen Querschnitt aufweist.

7. Vorrichtung (10) nach einem der vorhergehenden Ansprüche, die ferner eine längliche Form (20) mit einem Heizelement einschließt, wobei die längliche Form (20) gegenüber der Arbeitsfläche (32) des Ambosses (30) angeordnet ist, wobei die längliche Form (20) und der Amboss (30) von einer ersten Position mit einer Lücke dazwischen zur Aufnahme von Kunststoffmaterial in eine zweite Position, in der die längliche Form (20) an dem Amboss (30) anliegt, bewegt werden können.

## Revendications

1. Appareil (10) pour couper et sceller des matières plastiques, comprenant une enclume (30), dotée :
d'un support souple (40) définissant au moins une partie de la face de travail (32) de l'enclume (30) ; et
d'un élément de coupe (42) comprenant un corps allongé (44) avec un axe longitudinal et une pluralité de bords de coupe (46) parallèles à celui-ci, les bords de coupe (46) étant espacés dans l'axe longitudinal du corps allongé (44), l'élément de coupe (42) étant monté dans le support souple (40), un bord de coupe (46) étant exposé à la face de travail (32) de l'enclume (30),
**caractérisé en ce que** le profil de l'élément de coupe (42) est configuré pour maintenir à la face de travail (32) de l'enclume (30) un espacement substantiellement constant entre des parties du support souple (40) sur des côtés opposés de l'élément de coupe (42) au cours de la compression du support souple (40).

2. Appareil (10) selon la revendication 1, le corps allongé (44) présentant au moins une partie (50) associée avec chaque bord de coupe (46), comprenant une surface (52) substantiellement perpendiculaire à un plan notionnel défini par le bord de coupe respectif et l'axe longitudinal du corps allongé (44).

3. Appareil (10) selon la revendication 2, chacun des bords de coupe (46) comprenant deux parties (50) associées avec chaque bord de coupe (46), de part et d'autre de celui-ci, chaque partie (50) comprenant une surface (52) substantiellement perpendiculaire à un plan notionnel défini par son bord de coupe respectif (46) et l'axe longitudinal du corps allongé (44).

4. Appareil (10) selon une quelconque des revendications précédentes, dans lequel les bords de coupe (46) sont espacés de façon équidistante dans une direction circonférentielle autour de l'axe longitudinal du corps allongé (44).

5. Appareil (10) selon une quelconque des revendications précédentes, dans lequel l'élément de coupe (42) présente quatre bords de coupe (46).

6. Appareil (10) selon la revendication 5, dans lequel l'élément de coupe (42) présente une section transversale cruciforme.

7. Appareil (10) selon une quelconque des revendications précédentes, comprenant en outre une matrice allongée (20) avec une résistance de chauffage, la matrice allongée (20) étant positionnée en face de la face de travail (32) de l'enclume (30), la matrice allongée (20) et l'enclume (30) pouvant être déplacées d'une première position, avec un écart entre elles pour recevoir une matière plastique, à une deuxième position, où la matrice allongée (20) vient buter contre l'enclume (30).
